# EUROPEAN PATENT SPECIFICATION

(11) **EP 4 227 054 B1**
(45) Date of publication and mention of the grant of the patent: **17.09.2025**
(21) Application number: 22888635.4
(22) Date of filing: 30.11.2022
(51) Int. Cl.: B28B 13/02, B05C 19/04, B05B 7/14

(54) **DIGITAL POWDER DISTRIBUTION NOZZLE CAPABLE OF HANDLING LARGE POWDER AMOUNT AND HAVING GREATER ADAPTABILITY**
DIGITALE PULVERVERTEILUNGSDÜSE MIT GROSSER PULVERMENGE UND GROSSER ANPASSUNGSFÄHIGKEIT
BUSE DE DISTRIBUTION DE POUDRE NUMÉRIQUE POUVANT GÉRER UNE GRANDE QUANTITÉ DE POUDRE ET AYANT UNE ADAPTABILITÉ SUPÉRIEURE

(30) Priority: 29.12.2021 CN 202111644014
(43) Date of publication of application: 16.08.2023
(73) Proprietor: Foshan Hope Digital Printing Equipment Co., Ltd., Foshan City, Guangdong 528200 (CN)
(72) Inventor: DENG, Sheguang, Foshan, Guangdong 528200 (CN)
(74) Representative: Wittmer, Maximilian
(86) International application number: PCT/CN2022/135305
(87) International publication number: WO 2023/124712

(56) References cited:
- EP-A1- 3 865 269
- WO-A1-2009/118611
- WO-A1-2018/002807
- CN-A- 108 501 174
- CN-A- 109 397 509
- CN-A- 110 524 705
- CN-A- 111 036 509
- CN-A- 111 331 720
- CN-U- 213 833 069
- US-A1- 2009 211 524

## Description

### CROSS REFERENCE TO RELATED APPLICATIONS

The present application claims priority to Chinese Patent Application No. 202111644014.3, entitled "digital powder distribution nozzle for a large amount of powder and wider adaptability", and filed to the China National Intellectual Property Administration on December 29, 2021.

### TECHNICAL FIELD

The present application relates to the technical field of ceramic powder distribution, in particular relates to a digital powder distribution nozzle for a large amount of powder and wider adaptability.

### BACKGROUND

Ceramic tiles can be used to decorate and protect the walls and floors of buildings. With the continuous development of social economy and the continuous improvement of people's living standards, people's demand for ceramic tiles is increasing day by day, and the requirements for the decorative effect of the ceramic tiles are also becoming higher and higher. Currently, in the ceramic industry, the full-body tiles are generally tiled with mixed materials, or the powder is controlled by pneumatic control, which cannot realize the fine distribution of the full-body brick texture, and cannot be consistent, that is, the texture inside the brick is inconsistent with the texture on the surface, and the texture effect is only reflected on surface of the brick, and is greatly different from that of a natural stone, and the texture effect is unnatural. In addition, in the powder spreading equipment, a row of the powder discharging openings are usually used in cooperation with a powder hopper, the powder is discharged from the powder hopper to the powder discharging opening, so as to realize the powder distribution, which makes the volume of the equipment large, the space occupancy rate of the equipment large, and the distribution for a large amount of power cannot be carried out. For different powder, due to the particle size, appearance shape and water content of the powder itself have an impact on the power discharging. Therefore, the existing nozzle cannot adapt to different powder, thereby affecting the effect of distributing powder.

WO 2009/118611 A1 discloses a digital powder distribution nozzle according to the preamble of claim 1, more particularly it discloses a device and a method for controlled dispensing of a solid loose material, in granular, powder or scale form, comprising a container hopper of the material provided with at least a discharge mouth, a distribution element located at a distance below the discharge mouth, such that material exiting from the container hopper can accumulate thereon, and vibrator means selectively destined to set the distribution element in vibration, such that the accumulated material slides on the distribution element up until the material falls from at least a falling edge thereof.

US 2009/211524 A1 discloses a sprinkling head for sprinkling powder on a glass plate. The sprinkling head comprises a frame and one or more delivering devices for delivering a powder to the transparent plate. The one or more delivering devices are mechanically coupled to the frame and comprise: a container for containing a pigmented powder; an outlet unit for delivering the power onto the transparent plate, the outlet unit comprising an opening through which the powder is delivered onto the transparent plate; a vibratable feed channel for feeding the powder from the container to the outlet unit when the feed channel is in a vibrational state, in which state the feed channel vibrates with respect to the frame so that the powder is sprinkled, via the opening, onto the plate, and an actuator for bringing the feed channel into the vibrational state.

### SUMMARY OF THE INVENTION

In view of the problems raised in the background technology, the purpose of the present application is to propose a digital powder distribution nozzle for a large amount of powder and wider adaptability, which can realize the distribution for a large amount of powder, and has wide adaptability for distributing different powder, and the texture is highly controllable. The obtained brick texture is natural, effectively reduces the volume of the nozzle, and solves the problems of the existing full-body brick not performing the distribution with a large amount of powder, poor adaptability to different powder, not fine controlling the texture of the brick, unnatural texture effect and large nozzle space occupancy.

To achieve this purpose, the present application adopts the following technical solutions:
A digital powder distribution nozzle for a large amount of powder and wider adaptability, comprising a control system, a powder storage hopper, a flat cable plug, a powder storage base, a nozzle baseplate, and a plurality of vibrating powder-spraying assemblies;
the bottom of the powder storage base is installed on the nozzle baseplate, the inside of the powder storage base is provided with a powder storage cavity, and the top of the powder storage base is provided with a first feeding port; the top of the powder storage hopper is provided with a second feeding port, the bottom of the powder storage hopper is provided with a discharging port, the bottom of the powder storage hopper is inserted into the powder storage cavity after passing through the first feeding port, and the powder storage hopper can move up and down relative to the powder storage base;
two sides of the powder storage base in the width direction are respectively provided with one row of vibrating powder-spraying assemblies, and two sides of the powder storage base in the width direction are respectively provided with one row of jacks communicated with the powder storage cavity, and the powder inlet end of the vibrating powder-spraying assembly and the jack are arranged in a one-to-one correspondence manner;
the nozzle baseplate is provided with two rows of spraying-holes, the spraying-holes are configured to discharge powder, a powder outlet end of the vibrating powder-spraying assembly is located on one side of the spraying-holes in a one-to-one correspondence manner, and the powder discharging range of the powder outlet end of the vibrating powder-spraying assembly is within the feeding range of the corresponding spraying-holes.

Optionally, the powder inlet end of the vibrating powder-spraying assembly and the powder outlet end of the vibrating powder-spraying assembly are both horizontally arranged.

Optionally, the powder inlet end of the vibrating powder-spraying assembly and the powder outlet end of the vibrating powder-spraying assembly are obliquely arranged relative to the horizontal plane. Optionally, the powder inlet end of the vibrating powder-spraying assembly and the powder outlet end of the vibrating powder-spraying assembly form an angle θ relative to the horizontal plane.

Optionally, the vibrating powder-spraying assembly is electrically connected to the flat cable plug, and the flat cable plug is electrically connected to the control system, and the control system controls the vibration of the vibrating powder-spraying assembly through the flat cable plug.

Optionally, the vibrating powder-spraying assembly comprises a bracket, a vibrating member and a powder-spraying box, the bracket is fixedly installed on the powder storage base, the top of the vibrating member is detachably installed on the bracket, the bottom of the vibrating member is fixedly connected to the powder-spraying box, and the jack and the powder-spraying box are arranged in a one-to-one correspondence manner;
the powder-spraying box is a hollow structure with openings in the both ends, the opening at one end of the powder-spraying box is inserted into the powder storage cavity after passing through the corresponding jack, the opening at the other end of the powder-spraying box is arranged towards one side of the corresponding spraying-hole.

Optionally, the bracket comprises a vertical part and a clamping part, the vertical part is vertically connected to the clamping part, the vertical part is fixedly installed on the powder storage base, and the vibrating member is detachably installed on the clamping part.

Optionally, the clamping part comprises a first clamping block and a second clamping block arranged in parallel with each other, a clamping gap is reserved between the first clamping block and the second clamping block, and the vibrating member is detachably clamped in the clamping gap between the first clamping block and the second clamping block.

Optionally, the jack is arranged between the bracket and the nozzle baseplate, the powder-spraying box is arranged above the nozzle baseplate, the opening at one end of the powder-spraying box is inserted into the powder storage cavity after passing through the corresponding jack, and the opening at the other end of the powder-spraying box is located above the side of the spraying-hole.

Optionally, the longitudinal section of the powder-spraying box is rectangular, and the angle between the diagonal line in the longitudinal section of the powder-spraying box and the horizontal plane is greater than 48°.

Optionally, in the same row of vibrating powder-spraying assemblies, the spacing between two adjacent powder-spraying boxes is equal.

Optionally, the flat cable plug is fixedly installed on the powder storage hopper, and the flat cable plug is arranged on both sides of the powder storage hopper in the width direction, the vibrating members of each row of the vibrating powder-spraying assemblies are electrically connected to the connecting wires of the corresponding flat cable plug.

Optionally, the spraying-hole comprises a feeding part and a distribution part which are communicated with each other, and the distribution part is connected to a lower end of the feeding part;
the feeding part is a tapered hole having a large cross-sectional area at upper portion and a small cross-sectional area at lower portion, and the tapered angle λ of the feeding part is in a range of 10° to 90°, and the distribution part is a circular hole, a square hole or an elliptical hole.

Optionally, the distribution part is a circular hole, and the aperture of the distribution part is 2 to 10 times the particle size of powder.

Optionally, the powder storage base comprises a powder storage box and a sealing plate, the inner cavity of the powder storage box is the powder storage cavity, and the sealing plate is respectively arranged on both sides of the powder storage box in the width direction;
the powder storage box is provided with an opening for the powder storage box, and the sealing plate is provided with an opening for the sealing plate.

Optionally, the sealing plate is made of a soft material.

Optionally, the vibrating powder-spraying assembly further comprises an adjusting block, a connecting piece and a sealed chamber.

Optionally, the connecting piece is fixedly connected to the vibrating member, and the connecting piece is detachably installed on the bracket.

Optionally, the sealed chamber and the jack are arranged in a one-to-one correspondence manner, one end of the sealed chamber is sleeved on one side of the powder-spraying box, and the other end of the sealed chamber is inserted into the powder storage cavity after passing through the jack; the adjusting block is installed on the lower side of the vibrating member.

Optionally, the adjusting block is fixedly connected to the vibrating member, and the position of the adjusting block can be moved and the angle of the adjusting block can be adjusted.

As an alternative embodiment, the vibrating powder-spraying assembly comprises a bracket, a vibrating member, a powder-spraying box, an adjusting block, a connecting piece and a sealed chamber, the bracket is fixedly installed on the powder storage base, the top of the vibrating member is fixedly connected to the connecting piece, the connecting piece is detachably installed on the bracket, the bottom of the vibrating member is fixedly connected to the powder-spraying box, the sealed chamber is sleeved on one end of the powder-spraying box, the jack and the sealed chamber are arranged in a one-to-one correspondence manner, the adjusting block is installed on the lower side of the vibrating member, the powder-spraying box is a hollow structure with openings on both ends, one end of the powder-spraying box is sleeved with the sealed chamber, and the sealed chamber is longer than the powder-spraying box, and the other end of the sealed chamber is inserted into the powder storage cavity after passing through the corresponding jack, the opening at the other end of the powder-spraying box is arranged towards one side of the corresponding spraying-hole. Optionally, the sealed chamber is made of a semi-soft wear-resistant material, and is tightly connected to the powder-spraying box. Optionally, the bracket comprises a vertical part and a clamping part, the vertical part is vertically connected to the clamping part, the vertical part is fixedly installed on the powder storage base, and the connecting piece is detachably installed on the clamping part. Optionally, the jack comprises an opening for the powder storage box and an opening for the sealing plate. Optionally, the sealing plate is made of a soft material, and the opening for the sealing plate is slightly smaller than the sealed chamber. Optionally, the opening for the powder storage box is slightly larger than the sealed chamber. Optionally, the jack is arranged between the bracket and the nozzle baseplate, the powder-spraying box is arranged above the nozzle baseplate, the opening at one end of the sealed chamber is inserted into the powder storage cavity after passing through the corresponding jack, and the opening at the other end of the powder-spraying box is located above the side of the spraying-hole. Optionally, the adjusting block is fixedly connected to the vibrating member, and the adjusting block can be moved and the angle of the adjusting block can be adjusted.

Compared with the prior art, the embodiments of the present application have the following beneficial effects:
1. Since it is equipped with a plurality of vibrating powder-spraying assemblies and a plurality of nozzles, digital distribution of powder can be realized. When distributing powder, by controlling the vibration of the vibrating powder-spraying assemblies, so as to control whether the different spraying-holes to distribute powder, so that powder can be distributed on demand, and the texture's fine control of digital powder distribution is realized, the texture is highly controllable, the bricks with the same overall texture (inner texture and outer texture) can be distributed, and the texture of the bricks obtained is natural and realistic. By using the powder-spraying box, the distribution for a large amount of powder can be realized. By the powder storage hopper being moved up and down and being cooperated with the powder-spraying box, it can adapt to different powder discharging, making the adaptability of the nozzle wider.
2. By setting the adjusting block, the vibration frequency of each vibrating member can be adjusted to be consistent, so that the powder distribution amount of different spraying-holes is consistent, and uniform powder distribution can be realized.
3. By controlling the vibration frequency or amplitude of the vibrating member, the size of the amount of powder for distribution can be controlled. The distribution amount is proportional to the amplitude and the width of the powder-spraying box. Therefore, by controlling the vibration frequency or amplitude of the vibrating member and the width of the powder-spraying box, the amount of powder for the distribution can be controlled, thereby facilitating controlling the amount of powder for distribution;
4. By setting the structure of the double-row vibrating powder-spraying assemblies, the volume of the nozzle can be effectively reduced, and a plurality of powder-spraying boxes adopt a narrow side-edge structure, so that the spraying-hole can be of a single-row structure to achieve Chinese word " 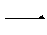 "shaped splicing, no need to splicing Chinese word " 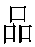 ", and save more equipment space.

### BRIEF DESCRIPTION OF THE DRAWINGS

FIG. 1 is a three-dimensional structural diagram of the digital powder distribution nozzle for a large amount of powder and wider adaptability according to an embodiment of the present application;
FIG. 2 is an enlarged structural diagram at position A of FIG. 1;
FIG. 3 is a cross-sectional structural diagram of the digital powder distribution nozzle for a large amount of powder and wider adaptability according to an embodiment of the present application;
FIG. 4 is a schematic diagram of the installation structure of a powder storage hopper and a powder storage base for the digital powder distribution nozzle for a large amount of powder and wider adaptability according to an embodiment of the present application;
FIG. 5 is a top viewed structural schematic diagram of the nozzle baseplate of the digital powder distribution nozzle for a large amount of powder and wider adaptability according to an embodiment of the present application;
FIG. 6 is a bottom viewed structural schematic diagram of the nozzle baseplate of the digital powder distribution nozzle for a large amount of powder and wider adaptability according to an embodiment of the present application;
FIG. 7 is a cross-sectional structural diagram of the nozzle baseplate of the digital powder distribution nozzle for a large amount of powder and wider adaptability according to an embodiment of the present application;
FIG. 8 is a three-dimensional structural diagram of the digital powder distribution nozzle for a large amount of powder and wider adaptability according to another embodiment of the present application;
FIG. 9 is an enlarged structural diagram at position A of FIG. 8;
FIG. 10 is a cross-sectional structural diagram of the digital powder distribution nozzle for a large amount of powder and wider adaptability according to another embodiment of the present application;

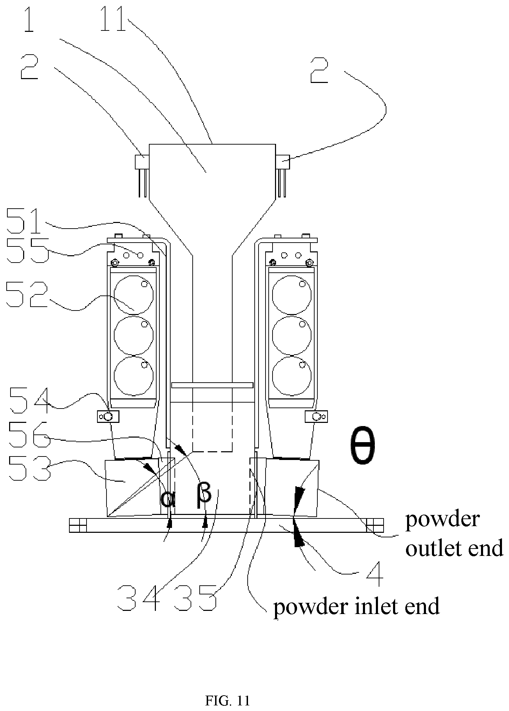

FIG. 11 is a cross-sectional structural diagram of the digital powder distribution nozzle for a large amount of powder and wider adaptability according to another embodiment of the present application; wherein, powder storage hopper 1, second feeding port 11, discharge port 12, flat cable plug 2, powder storage base 3, powder storage cavity 31, first feeding port 32, jack 33, sealing plate 34, powder storage box 35, nozzle baseplate 4, spraying-hole 41, feeding part 411, distribution part 412, vibrating powder-spraying assembly 5, bracket 51, vertical part 511, clamping part 512, first clamping block 5121, second clamping block 5122, fastener 513, vibrating member 52, powder-spraying box 53, adjusting block 54, connecting piece 55, fastener 551, sealed chamber 56.

### DETAILED DESCRIPTION

Embodiments of the present application are described in detail below, and examples of which are shown in the drawings, wherein the same or similar reference numerals represent the same or similar elements or element having the same or similar functions throughout. The embodiments described below with reference to the accompanying drawing are illustrative and are only used to explain the present application, but should not be construed as limiting the present application.

In the description of the present application, it should be understand that the terms "longitudinal", "transverse", "upper", "lower", "front", "rear", "left", "right", "vertical", "horizontal", "top", "bottom", "in", "outside", and other indications of orientation or positional relationships are based on the orientation or positional relationships shown in the drawings, and are only for convenience of describing the present application and simplifying the description. It does not indicate or imply that the device or element referred to must have a specific orientation, or be constructed and operated in a specific orientation, and therefore should not be constructed as limiting the present application. In addition, a feature defined with "first" or "second" may explicitly or implicitly comprising one or more of the feature, and they are used for distinguishing between descriptive features without distinction about order or importance.

In the description of the present application, unless otherwise specified, "plurality" means two or more.

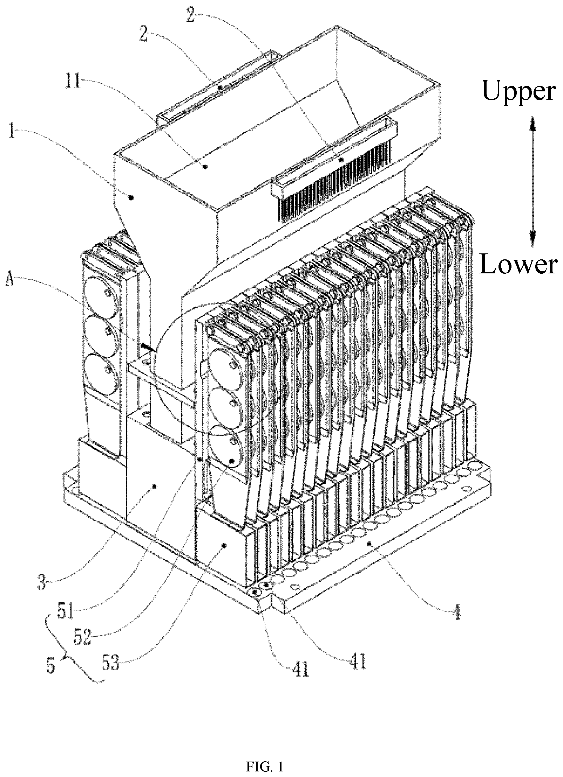

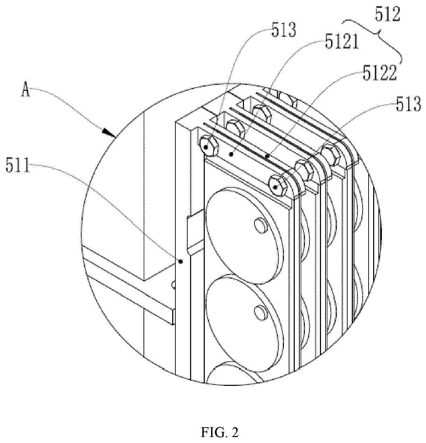

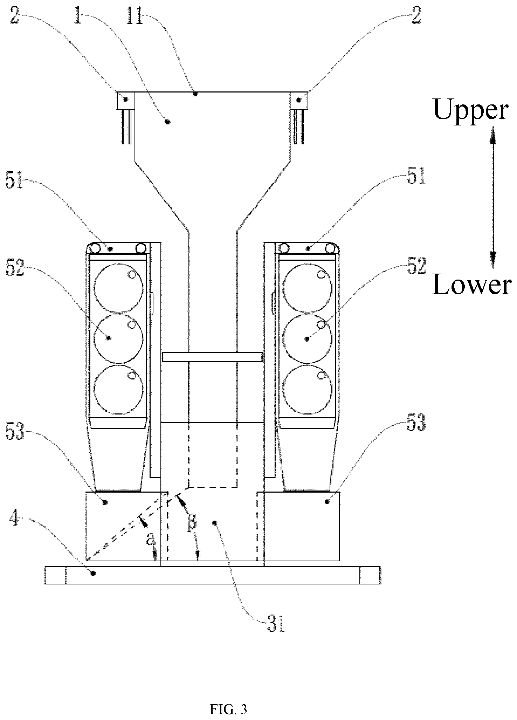

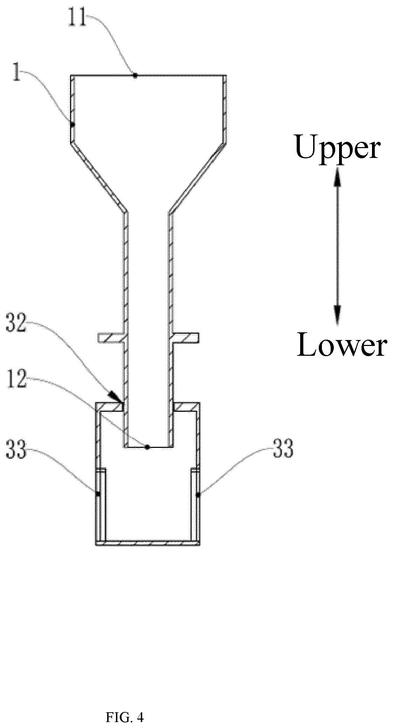

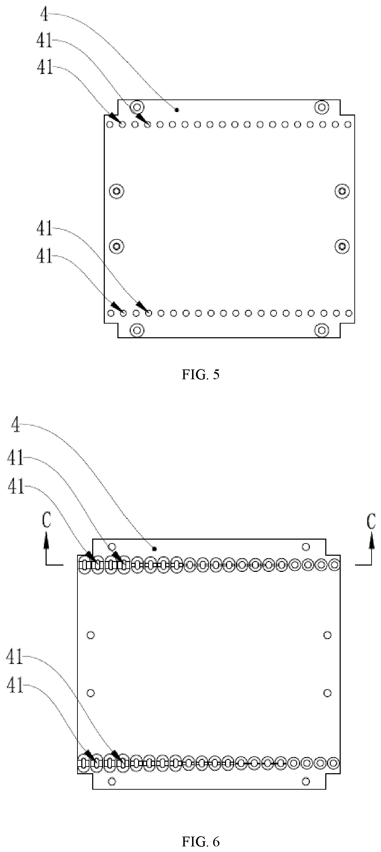

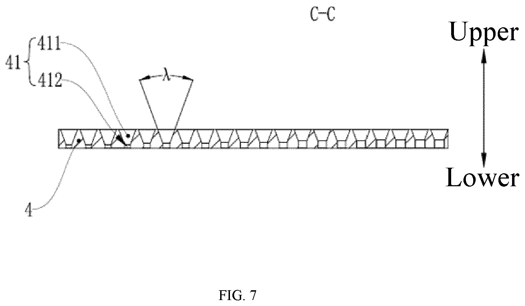

As shown in FIGS. 1 to 7, a digital powder distribution nozzle for a large amount of powder and wider adaptability comprises a control system, a powder storage hopper 1, a flat cable plug 2, a powder storage base 3, a nozzle baseplate 4 and a plurality of vibrating powder-spraying assemblies 5.

The bottom of the powder storage base 3 is installed on the nozzle baseplate 4, the inside of the powder storage base 3 is provided with a powder storage cavity 31, and the top of the powder storage base 3 is provided with a first feeding port 32; the top of the powder storage hopper 1 is provided with a second feeding port 11, the bottom of the powder storage hopper 1 is provided with a discharging port 12. The bottom of the powder storage hopper 1 is inserted into the powder storage cavity 31 after passing through the first feeding port 32, and the powder storage hopper 1 can move up and down relative to the powder storage base 3.

Two sides of the powder storage base 3 in the width direction are respectively provided with one row of vibrating powder-spraying assemblies 5, and two sides of the powder storage base 3 in the width direction are respectively provided with one row of jacks 33 communicated with the powder storage cavity. And the powder inlet end of the vibrating powder-spraying assembly 5 and the jack 33 are arranged in a one-to-one correspondence manner.

Optionally, the powder storage base comprises a powder storage box and a sealing plate, the inner cavity of the powder storage box is the powder storage cavity, and the sealing plate is respectively arranged on both sides of the powder storage box in the width direction.

Optionally, the powder storage box is provided with an opening for the powder storage box, and the sealing plate is provided with an opening for the sealing plate.

The sealing plate is made of a soft material and can be tightly connected to the powder-spraying box. Optionally, the sealing plate is a semi-soft wear-resistant material.

The nozzle baseplate 4 is provided with two rows of spraying-holes 41, the spraying-holes 41 are configured to discharge powder, the powder outlet end of the vibrating powder-spraying assembly 5 is located on one side of the spraying-hole 41 in a one-to-one correspondence manner, and the powder discharging range of the powder outlet end of the vibrating powder-spraying assembly 5 is within the feeding range of the corresponding spraying-holes 41. The powder inlet end of the vibrating powder-spraying assembly and the powder outlet end of the vibrating powder-spraying assembly 5 are both horizontally arranged. Alternatively, the powder inlet end of the vibrating powder-spraying assembly and the powder outlet end of the vibrating powder-spraying assembly are obliquely arranged relative to the horizontal plane, that is, the powder inlet end and the powder outlet end can form an angle θ relative to the horizontal plane.

The vibrating powder-spraying assembly 5 is electrically connected to the flat cable plug 2, and the flat cable plug 2 is electrically connected to the control system, and the control system controls the vibration of the vibrating powder-spraying assembly 5 through the flat cable plug 2.

By providing the powder storage hopper 1, the powder storage hopper 1 supplies powder to the powder storage base 3. When the powder is discharged from the powder storage hopper 1 to the powder storage base 3, the powder is stacked in a stacked shape in the powder storage cavity 31. The powder inlet end of the vibrating powder-spraying assembly and the powder outlet end of the vibrating powder-spraying assembly 5 are both horizontally arranged, and the powder is also stacked in the vibrating powder-spraying assembly 5 in a stacked shape. Due to the fact that the static repose angle of the powder particles is in a range of 27° to 48°, the dynamic repose angle is smaller than the static repose angle, and generally, the dynamic repose angle is 70% of the static repose angle (it should be noted that the repose angle is the maximum angle at which materials may be stacked in a static state when stacked in a natural state, the static repose angle is a repose angle of a material in a static state, and the dynamic repose refers to a repose angle of the material during transportation, due to movement, the repose angle of a material during movement is slightly smaller than the repose angle when the material is stationary). The height of the powder storage hopper 1 is adjusted by the powder storage being moved hopper 1 up and down relative to the powder storage base 3, so that the angle β (hereinafter referred to as "powder-spraying angle β") between the connecting line of the tail end of the powder outlet end of the vibrating powder-spraying assembly 5 and one end of the bottom of the powder storage hopper 1 close to the vibrating powder spraying assembly 5 is approximately equal to the static repose angle of the powder material, to adapt to the powder with different static repose angles. When the vibrating powder-spraying assembly 5 vibrating to discharge the powder, the powder is squeezed during vibration movement, since the dynamic repose angle of the powder material is smaller than the powder-spraying angle β, the powder falls off from the vibrating powder-spraying assembly 5; and when the vibrating powder-spraying assembly 5 stopping vibrating, the powder is changed into a static state, since the static repose angle of the powder is approximately equal to the powder-spraying angle β, the powder stops falling down.

Since it is equipped with a plurality of vibrating powder-spraying assemblies 5 and a plurality of nozzles 41, digital distribution of powder can be realized. When distributing powder, by controlling the vibration of the vibrating powder-spraying assemblies 5, so as to control whether the different spraying-holes 41 to distribute powder, so that powder can be distributed on demand, and the texture's fine control of digital powder distribution is realized, the texture is highly controllable, the bricks with the same overall texture (inner texture and outer texture) can be distributed, and the texture of the bricks obtained is natural and realistic. By the powder storage hopper 1 being moved up and down and being cooperated with the vibrating powder-spraying assemblies 5, it can adapt to different powder discharging, making the adaptability of the nozzle wider.

By setting the structure of the double-row vibrating powder-spraying assemblies 5, the volume of the nozzle can be effectively reduced, and a plurality of vibrating powder-spraying assemblies 5 adopt a narrow side-edge structure, so that the spraying-hole 41 can be of a single-row structure to achieve Chinese word " 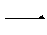 " shaped splicing, no need to splicing Chinese word " 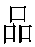 ", and save more equipment space.

Optionally, the powder storage hopper 1 can be driven to move up and down through the connection between the linear module and the powder storage hopper 1, so that the motion stability is high, and the precision of the digital distribution is ensured.

The digital powder distribution nozzle for a large amount of powder and wider adaptability can realize the distribution for a large amount of powder, and has wide adaptability for distributing different powder, and the texture is highly controllable. The obtained brick texture is natural, effectively reduces the volume of the nozzle, and solves the problems of the existing full-body brick not performing the distribution with a large amount of powder, poor adaptability to different powder, not fine controlling the texture of the brick, unnatural texture effect and large nozzle space occupancy a large amount of powder.

Optionally, the vibrating powder-spraying assembly 5 comprises a bracket 51, a vibrating member 52 and a powder-spraying box 53, the bracket 51 is fixedly installed on the powder storage base 3, the top of the vibrating member 52 is detachably installed on the bracket 51, the bottom of the vibrating member 52 is fixedly connected to the powder-spraying box 53, and the jack 33 and the powder-spraying box 53 are arranged in a one-to-one correspondence manner.

The powder-spraying box 53 is a hollow structure with openings at both ends, the opening at one end of the powder-spraying box 53 is inserted into the powder storage cavity 31 after passing through the corresponding jack 33, and the opening at the other end of the powder-spraying box 53 is arranged towards one side of the corresponding spraying-hole 41.

By providing the vibrating member 52 and the powder-spraying box 53, when powder is discharged from the powder storage hopper 1 to the powder storage base 3, the powder is stacked in a stacked shape in the powder storage cavity 31. Due to the fact that the powder-spraying box 53 is inserted into the powder storage cavity 31 after passing through the jack 33, the powder is also stacked in a stacked shape in the powder-spraying box 53. Due to the fact that the static repose angle of the powder particles is in a range of 27° to 48°, the dynamic repose angle is smaller than static repose angle, and generally, the dynamic repose angle is 70% of the static repose angle. By the powder storage hopper 1 being moved up and down relative to the powder storage base 3, the height of the powder storage hopper 1 is adjusted, thereby making angle β (hereinafter referred to as "powder-spraying angle β") between the connecting line of an end of the powder-spraying box 53 away from the powder storage hopper 1 and an end of the bottom of the powder storage hopper 1 close to the powder-spraying box 53 is approximately equal to repose angle of the powder, so as to adapt to the powder with different static repose angles. When the powder-spraying box 53 is driven by the vibrating member 52 to perform lateral vibration(it should be noted that lateral refers to the arrangement direction of the vibrating powder-spraying assembly), the powder is squeezed under the lateral movement of the powder spraying box 53, as the dynamic repose angle of powder is smaller than the powder-spraying angle β, the powder falls off from the powder-spraying box 53; and when the powder-spraying box 53 stopping vibrating, the powder is changed into a static state, since the static repose angle of the powder is approximately equal to the powder-spraying angle β, the powder stops falling down. By the powder storage hopper 1 being moved up and down and being cooperated with the powder-spraying box 53, it can adapt to different powder discharging, making the adaptability of the nozzle wider.

In addition, the amount of falling powder is proportional to the width of the powder-spraying box 53, and is proportional to the amplitude and strength of the vibrating member 52. Affected by the vibration frequency of the vibrating member 52, the width of the powder-spraying box 53 can reach 2mm to 10mm. The greater the width of the powder-spraying box 53 is, the larger amount of falling powder is, so that powder distribution with a large amount of powder is realized. Further, by controlling the vibration frequency or amplitude of the vibrating member 52, the size of the amount of powder for distribution can be controlled. The distribution amount is proportional to the amplitude and the width of the powder-spraying box 53. Therefore, by controlling the vibration frequency or amplitude of the vibrating member 52 and the width of the powder-spraying box 53, the amount of powder for the distribution can be controlled, thereby facilitating controlling the amount of powder for distribution.

It should be noted that, the powder-spraying box 53 is inserted into the powder storage cavity 31 after passing through the corresponding jack 33, and a gap is reserved between the powder-spraying box 53 and the jack 33, so that the powder-spraying box 53 performs vibration motion while passing through the jack 33.

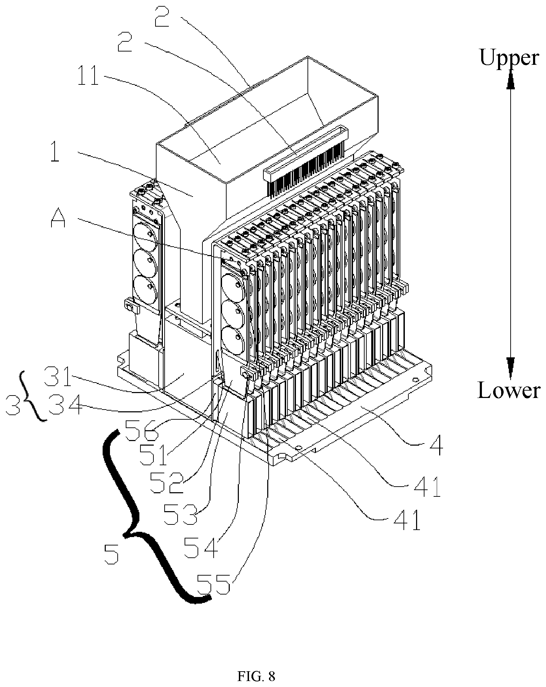

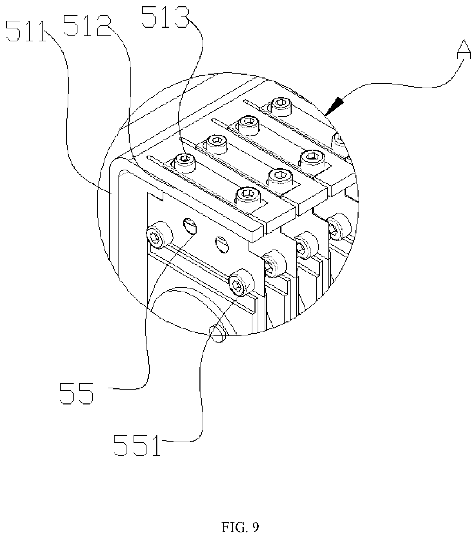

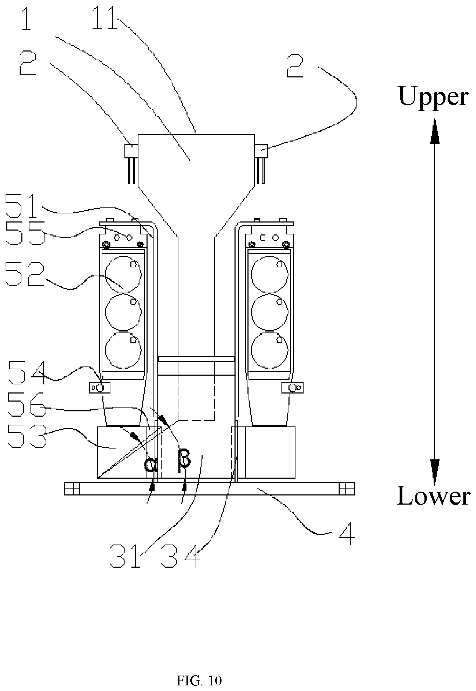

As another embodiment of the vibrating powder-spraying assembly, as shown in FIGS. 8 to 10, the vibrating powder-spraying assembly 5 comprises a bracket 51, a vibrating member 52, a powder-spraying box 53, an adjusting block 54, a connecting piece 55 and a sealed chamber 56. The bracket 51 is fixedly installed on the powder storage base 3, the top of the vibrating member 52 is fixedly connected to the connecting piece 55, and the connecting piece 55 is detachably installed on the bracket 51, the bottom of the vibrating member 52 is fixedly connected to the powder-spraying box 53, the sealed chamber 56 is sleeved at one end of the powder-spraying box 53, and the jack 33 and the sealed chamber 56 are arranged in a one-to-one correspondence manner; the adjusting block 54 is installed on the lower side of the vibrating member 52.

The powder-spraying box 53 is a hollow structure with openings on both ends, one end of the powder-spraying box 53 is sleeved with the sealed chamber 56, the sealed chamber 56 is longer than the powder-spraying box 53, the opening at the other end of the sealed chamber 56 is inserted into the powder storage cavity 31 after passing through the corresponding jack 33, the opening at the other end of the powder-spraying box 53 is arranged towards one side of the corresponding spraying-hole 41.

The adjusting block 54 is fixedly connected to the vibrating member 52, and the adjusting block 54 can be moved and the angle of the adjusting block 54 can be adjusted. When the angle of the adjusting block 54 is adjusted close to the powder-spraying box 53, the resonance frequency is increased; when the adjusting block 54 is adjusted away from the powder-spraying box 53, the resonance frequency is reduced. By providing the adjustment block 54, the vibration frequency of each vibrating powder-spraying assembly 5 can be adjusted to be consistent, thus making the powder spreading amount of different spraying-holes to be consistent, and uniform powder distribution is realized.

By providing the vibrating member 52 and the powder-spraying box 53, when the powder is discharged from the powder storage hopper 1 to the powder storage base 3, the powder is stacked in a stacked shape in the powder storage cavity 31. Due to the fact that the sealed chamber 56 is inserted into the powder storage cavity 31 after passing through the jack 33, and the sealed chamber 56 is sleeved at one end of the powder-spraying box 53, the powder also is stacked in a stacked shape in the powder-spraying box 53. Due to the fact that the static repose angle of the powder particles is in a range of 27° to 48°, the dynamic repose angle is smaller than the static repose angle, and generally the dynamic repose angle is 70% of the static repose angle. By the powder storage hopper 1 being moved up and down relative to the powder storage base 3, the height of the powder storage hopper 1 is adjusted, so that the angle β between the line connecting of the end the powder-spraying box 53 away from the powder storage hopper 1 and one end of the bottom of the powder storage hopper 1 close to the powder-spraying box 53 and the horizontal plane is approximately equal to the repose angle of the powder, so as to adapt to the powder with different static repose angles. When the powder-spraying box 53 are driven by the vibrating member 52 to perform lateral vibration (it should be noted that lateral refers to the arrangement direction of the vibrating powder-spraying assembly), the powder is squeezed under the lateral movement of the powder-spraying box 53, as the dynamic repose angle of powder is smaller than the powder-spraying angle β, the powder falls off from the powder-spraying box 53; and when the powder-spraying box 53 stopping vibrating, the powder is changed into a static state, since the static repose angle of the powder is approximately equal to the powder-spraying angle β, the powder stops falling down. By the powder storage hopper 1 being moved up and down and being cooperated with the powder-spraying box 53, it can adapt to different powder discharging, making the adaptability of the nozzle wider.

Optionally, the jack comprises an opening of the sealing plate and an opening of the powder storage box, the opening of the sealing plate is slightly smaller than the sealed chamber, and the opening of the powder storage box is slightly larger than the sealed chamber.

Optionally, the bracket 51 comprises a vertical part 511 and a clamping part 512, the vertical part 511 is vertically connected to the clamping part 512, the vertical part 511 is fixedly installed on the powder storage base 3, and the vibrating member 52 is detachably installed on the clamping part 512.

By providing the vertical part 511 and the clamping part 512, the vertical part 511 is fixedly installed on the powder storage base 3, and the vertical part 511 is vertically connected to the clamping part 512, so that the vibrating member 52 is installed on the side of the bracket 51 away from the powder storage base 3, the installation structure is stable. The vibrating member 52 is detachably installed on the clamping part 512 and is convenient to be dismounted. When the need for equipment maintenance, it is convenient to remove the vibrating member 52 from the clamping part 512 and adjust the texture effect of powder distribution.

Specifically, the clamping part 512 comprises a first clamping block 5121 and a second clamping block 5122 which are arranged in parallel with each other, a clamping gap is reserved between the first clamping block 5121 and the second clamping block 5122, and the vibrating member 52 is detachably clamped in the clamping gap between the first clamping block 5121 and the second clamping block 5122.

By providing the first clamping block 5121 and the second clamping block 5122, and the clamping gap is reserved between the first clamping block 5121 and the second clamping block 5122, the top of the vibrating member 52 is clamped in the clamping gap between the first clamping block 5121 and the second clamping block 5122, so as to ensure the installation stability of the vibrating member 52 and facilitate disassembling and installing.

Optionally, a fastener 513 can be used for passing through the first clamping block 5121, the vibrating member 52 and the second clamping block 5122, and the vibrating member 52 can be detachably installed in the clamping gap between the first clamping block 5121 and the second clamping block 5122. Specifically, the fastener 513 is a fastener such as a screw or bolt etc. By using fastener 513 to install the vibrating member 52 in the clamping gap between the first clamping block 5121 and the second clamping block 5122, the installation stability of the vibrating member 52 is effectively improved, thereby preventing the vibration member 52 from loosening and falling off during vibration.

Optionally, the jack 33 is arranged between the bracket 51 and the nozzle baseplate 4, and the powder-spraying box 53 is arranged above the nozzle baseplate 4. An opening at one end of the powder-spraying box 53 is inserted into the powder storage chamber 31 after passing through the corresponding jack 33, and an opening at the other end of the powder-spraying box 53 is located above the side of the spraying-hole 41.

By placing the powder-spraying box 53 above the nozzle baseplate 4, the powder-spraying box 53 is prevented from being blocked by the nozzle baseplate 4 when being driven by the vibrating member 52 to vibrate, thereby ensuring the vibration smoothness of the powder-spraying box 53. In addition, the opening at one end of the powder-spraying box 53 is inserted into the powder storage chamber 31 after passing through the corresponding jack 33, and the opening at the other end of the powder-spraying box 53 is located above the side of the spraying-hole 41, so that the powder discharged from the powder-spraying box 53 can be smoothly discharged to the spraying-hole 41, the powder discharging range of the powder discharging end of the vibration powder-spraying assembly 5 is within the powder feeding range of the corresponding spraying-hole 41, the powder is prevented from being discharged to other position of the nozzle baseplate 4, and the fineness of the powder distribution is ensured.

Optionally, the longitudinal section of the powder-spraying box 53 is a rectangular, and the angle between the diagonal line in the longitudinal section of the powder-spraying box 53 and the horizontal plane is greater than 48°.

By defining the longitudinal section of the powder-spraying box 53 to a rectangular, the powder can be easily stacked in the powder-spraying box 53. When the vibrating member 52 vibrates, the powder-spraying box 53 is driven to vibrate, so that the powder is discharged from the powder-spraying box 53 into the corresponding spraying-hole 41, thereby completing the digital powder distribution. Due to the fact that the angle between the diagonal line in the longitudinal section of the powder-spraying box 53 and the horizontal plane can limit the stacking angle of the powder in the powder-praying box 53, and the angle between the diagonal line in the longitudinal section of the powder-spraying box 53 and the horizontal plane is defined to be greater than 48°, and the static repose angle of powder particles is in a range of 27° to 48°, so that the powder-spraying box 53 can adapt to the static repose angle of most powder, and the adaptability of the digital powder distribution nozzle for a large amount of powder and wider adaptability for different powder is improved.

Optionally, in the same row of the vibrating powder-spraying assemblies 5, the spacing between two adjacent powder-spraying boxes 53 is equal.

Due to the fact that the spacing between two adjacent powder-spraying boxes 53 is equal in the same row of the vibrating powder-spraying assemblies 5, so that the digital powder distribution nozzle for a large amount of powder and wider adaptability is more compact, the texture fineness of the digital powder distribution of the digital powder distribution nozzle for a large amount of powder and wider adaptability can be effectively improved, thereby ensuring the texture effect obtained by powder distribution.

Specifically, the flat cable plug 2 is fixedly installed on the powder storage hopper 1, and the flat cable plug 2 is arranged on both sides of the powder storage hopper 1 in the width direction, the vibrating members 52 of each row of the vibrating powder-spraying assemblies 5 are electrically connected to the connecting wires of the corresponding flat cable plug 2.

By arranging the flat cable plug 2 on both sides of the powder storage hopper 1 in the width direction and electrically connecting the vibrating members 52 of each row to the connecting wires of the corresponding flat cable plug 2, so that wiring can be facilitated, the arrangement of the connecting lines of the flat cable plug 2 is realized, and the safety of the digital powder distribution nozzle for a large amount of powder and wider adaptability is ensured.

Optionally, the spraying-hole 41 comprises a feeding part 411 and a distribution part 412 which are communicated with each other, and the distribution part 412 is connected to a lower end of the feeding part 411.

Optionally, the feeding part 411 is a tapered hole having a large cross-sectional area at upper portion and a small cross-sectional area at lower portion, and the tapered angle λ of the feeding part 411 is in a range of 10° to 90°, and the distribution part 412 is a circular hole, a square hole or an elliptical hole. The smaller the width of the lower portion of the tapered hole is, the smaller the obtained powder spreading distribution strip is, the more conducive for better the fine pattern being arranged; correspondingly, the smaller the width of the lower portion of the tapered hole is, the longer the length of the lower portion of the tapered hole is, and the width of the lower portion of the tapered hole is larger than the maximum particle size of the powder.

By providing the feeding part 411 and the distribution part 412 on the spraying-hole 41, the distribution part 412 is connected to the lower end of the feeding part 411, and the feeding part 411 is a tapered hole having a large cross-sectional area at upper portion and a small cross-sectional area at lower portion, so that the powder can gradually enter the distribution part 412 along the feeding part 411, thereby finally realizing the powder distribution, improving the smoothness of powder discharging, and ensuring accurate distribution of the powder according to a set position. Further, the tapered angle λ of the feeding part 411 is defined in a range of 10° to 90° to ensure that the powder can enter the distribution part 412 from the feeding part 411. If the tapered angle of the feeding part 411 is too large, it may cause the powder is remained on the hole wall of the feeding part 411, thereby affecting the effect of the powder distribution.

Optionally, the distribution part 412 is a circular hole, and the aperture of the distribution part 412 is 2 to 10 times of the particle size of the powder.

Optionally, the particle size of the powder is generally 0.1mm to 5mm when the powder for a full-body brick is distributed. By defining the aperture of the distribution part 412 to be 2 to 10 times of the particle size of the powder, it is ensured that the powder can be discharged from the distribution part 412 after entering the distribution part 412 from the feeding part 411 of the spraying-hole 41, so that the precision of the powder discharging is ensured, the fineness of the textured distribution is effectively improved, and the continuity of the texture is ensured.

Optionally, the vibrating member 52 is a multi-core piezoelectric ceramic vibrating piece.

The vibrating member 52 uses a multi-core piezoelectric ceramic vibrating piece, and multi-core means that one vibrating piece resonates together with a plurality of vibration sources. As shown in FIG. 1, each of the vibrating members 52 is vertically arranged with three rows of six piezoelectric ceramics, and when the piezoelectric ceramics vibrate together in a uniform direction, the amplitude and vibration intensity of the vibrating members 52 can be enhanced, the more piezoelectric ceramics are, the greater the amplitude and vibration intensity is, which is beneficial to realizing a powder distribution with a large amount of powder. In addition, since the multi-core piezoelectric ceramic vibrating piece is a component that can electrically control the vibration frequency, the vibration actions such as vibration start/stop and vibration frequency of the vibrating members 52 can be easily controlled, thereby improving the controllability of the digital powder distribution.

As shown in FIG. 1, FIG. 2, FIG. 8 and FIG. 9, optionally, the vibrating member 52 is a sheet-shaped vibrating member. More specifically, the vibrating member 52 is a multi-core piezoelectric ceramic vibrating piece, and has a simple vibration structure and a good vibration effect.

The powder distribution process of the digital powder distribution nozzle of the present application comprises: the powder entering into the powder storage hopper 1 through the second feeding port 11 of the powder storage hopper 1, entering into the powder storage cavity 31 of the powder storage base through the discharging port of the powder storage hopper 1, and then entering into the powder-spraying box 53 of the vibration powder-spraying assembly 5 through the powder inlet end of the vibration powder-spraying assembly 5. Due to the friction force, the powder is stacked at an inclined plane in the powder-spraying box 53, and the angle of the powder is a static repose angle, and the powder stops flowing. When the vibrating powder-spraying assembly 5 vibrates, the powder is squeezed under the lateral movement of the powder-spraying box 53, because of the motion repose angle of the powder is smaller than the powder-spraying angle β, the powder falls from the powder-spraying box 53, and when the powder-spraying box 53 stops vibrating, the powder is changed into a static state, and since the static repose angle of the powder is approximately equal to the powder-spraying angle β, the powder stops falling. The powder is finally ejected from the spraying-hole 41 to form a pattern with bright and dark texture on a ceramic tile.

Although embodiments of the present application have been shown and described, a person ordinary skilled in the art may understand that a variety of changes, modifications, substitutions, and variations may be made to these embodiments without departing from the principles and purposes of the present application. The scope of the present application is defined by the claims.

## Claims

1. A digital powder distribution nozzle for a large amount of powder and wider adaptability, comprising a control system, a powder storage hopper (1), and a plurality of vibrating powder-spraying assemblies (5); **characterized in that** it further comprises a flat cable plug (2), a powder storage base (3) and a nozzle baseplate (4);
the bottom of the powder storage base (3) is installed on the nozzle baseplate (4), the inside of the powder storage base (3) is provided with a powder storage cavity (31), and the top of the powder storage base (3) is provided with a first feeding port (32); the top of the powder storage hopper (1) is provided with a second feeding port (11), the bottom of the powder storage hopper (1) is provided with a discharging port (12), the bottom of the powder storage hopper (1) is inserted into the powder storage cavity (31) after passing through the first feeding port (32), and the powder storage hopper (1) can move up and down relative to the powder storage base (3);
two sides of the powder storage base (3) in the width direction are respectively provided with one row of vibrating powder-spraying assemblies (5), and two sides of the powder storage base (3) in the width direction are respectively provided with one row of jacks (33) communicated with the powder storage cavity (31), and the powder inlet end of the vibrating powder-spraying assembly (5) and the jack (33) are arranged in a one-to-one correspondence manner;
the nozzle baseplate (4) is provided with two rows of spraying-holes (41), the spraying-holes (41) are configured to discharge powder, a powder outlet end of the vibrating powder-spraying assembly (5) is located on one side of the spraying-holes (41) in a one-to-one correspondence manner, and the powder discharging range of the powder outlet end of the vibrating powder-spraying assembly (5) is within the feeding range of the corresponding spraying-holes (41), the powder inlet end of the vibrating powder-spraying assembly (5) and the powder outlet end of the vibrating powder-spraying assembly are both horizontally arranged, or the powder inlet end of the vibrating powder-spraying assembly (5) and the powder outlet end of the vibrating powder-spraying assembly (5) are obliquely arranged relative to the horizontal plane;
the vibrating powder-spraying assembly (5) is electrically connected to the flat cable plug (2), and the flat cable plug (2) is electrically connected to the control system, and the control system controls the vibration of the vibrating powder-spraying assembly (5) through the flat cable plug (2).

2. The digital powder distribution nozzle for a large amount of powder and wider adaptability of claim 1, wherein the vibrating powder-spraying assembly (5) comprises a bracket (51), a vibrating member (52) and a powder-spraying box (53), the bracket (51) is fixedly installed on the powder storage base (3), the top of the vibrating member (52) is detachably installed on the bracket (51), the bottom of the vibrating member (52) is fixedly connected to the powder-spraying box (53), and the jack (33) and the powder-spraying box (53) are arranged in a one-to-one correspondence manner;
the powder-spraying box (53) is a hollow structure with openings at the both ends, the opening at one end of the powder-spraying box (53) is inserted into the powder storage cavity (31) after passing through the corresponding jack (33), and the opening at the other end of the powder-spraying box (53) is arranged towards one side of the corresponding spraying-hole (41).

3. The digital powder distribution nozzle for a large amount of powder and wider adaptability of claim 2, wherein the bracket (51) comprises a vertical part (511) and a clamping part (512), the vertical part (511) is vertically connected to the clamping part (512), the vertical part (511) is fixedly installed on the powder storage base (3), and the vibrating member (52) is detachably installed on the clamping part (512).

4. The digital powder distribution nozzle for a large amount of powder and wider adaptability of claim 3, wherein the clamping part (512) comprises a first clamping block (5121) and a second clamping block (5122) arranged in parallel with each other, a clamping gap is reserved between the first clamping block (5121) and the second clamping block (5122), and the vibrating member (52) is detachably clamped in the clamping gap between the first clamping block (5121) and the second clamping block (5122).

5. The digital powder distribution nozzle for a large amount of powder and wider adaptability of claim 2, wherein the jack (33) is arranged between the bracket (51) and the nozzle baseplate (4), the powder-spraying box (53) is arranged above the nozzle baseplate (4), the opening at one end of the powder-spraying box (53) is inserted into the powder storage cavity (31) after passing through the corresponding jack (33), and the opening at the other end of the powder-spraying box (53) is located above the side of the spraying-hole (41).

6. The digital powder distribution nozzle for a large amount of powder and wider adaptability of claim 2, wherein the longitudinal section of the powder-spraying box (53) is rectangular, and the angle between the diagonal line in the longitudinal section of the powder-spraying box (53) and the horizontal plane is greater than 48 °.

7. The digital powder distribution nozzle for a large amount of powder and wider adaptability of claim 2, wherein in the same row of vibrating powder-spraying assemblies (5), the spacing between two adjacent powder-spraying boxes (53) is equal.

8. The digital powder distribution nozzle for a large amount of powder and wider adaptability of claim 2, wherein the flat cable plug (2) is fixedly installed on the powder storage hopper (1), and the flat cable plug (2) is arranged on both sides of the powder storage hopper (1) in the width direction, the vibrating members (52) of each row of the vibrating powder-spraying assemblies (5) are electrically connected to the connecting wires of the corresponding flat cable plug (2).

9. The digital powder distribution nozzle for a large amount of powder and wider adaptability of claim 1, wherein the spraying-hole (41) comprises a feeding part (411) and a distribution part (412) which are communicated with each other, and the distribution part (412) is connected to a lower end of the feeding part (411);
the feeding part (411) is a tapered hole having a large cross-sectional area at upper portion and a small cross-sectional area at lower portion, and a tapered angle λ of the feeding part (411) is in a range of 10° to 90°, and the distribution part (412) is a circular hole, a square hole or an elliptical hole.

10. The digital powder distribution nozzle for a large amount of powder and wider adaptability of claim 9, wherein the distribution part (412) is a circular hole.

11. The digital powder distribution nozzle for a large amount of powder and wider adaptability of claim 1, wherein the powder storage base (3) comprises a powder storage box and a sealing plate, the inner cavity of the powder storage box is the powder storage cavity (31), and the sealing plate is respectively arranged on both sides of the powder storage box in the width direction;
the powder storage box is provided with an opening for the powder storage box, and the sealing plate is provided with an opening for the sealing plate;
optionally, the sealing plate is made of a soft material.

12. The digital powder distribution nozzle for a large amount of powder and wider adaptability of claim 2, wherein the vibrating powder-spraying assembly (5) further comprises an adjusting block (54), a connecting piece (55) and a sealed chamber (56);
the connecting piece (55) is fixedly connected to the vibrating member (52), and the connecting piece (55) is detachably installed on the bracket (51);
the sealed chamber (56) and the jack (33) are arranged in a one-to-one correspondence manner, one end of the sealed chamber (56) is sleeved on one side of the powder-spraying box (53), and the other end of the sealed chamber (56) is inserted into the powder storage cavity (31) after passing through the jack (33);
the adjusting block (54) is installed on the lower side of the vibrating member (52).

13. The digital powder distribution nozzle for a large amount of powder and wider adaptability of claim 12, wherein the adjusting block (54) is fixedly connected to the vibrating member (52), and the position of the adjusting block (54) can be moved and the angle of the adjusting block (54) can be adjusted.

## Patentansprüche

1. Digitale Pulververteilungsdüse für große Pulvermengen und eine breitere Anpassungsfähigkeit, umfassend ein Steuersystem, einen Pulverspeicherbehälter (1) und eine Vielzahl von vibrierenden Pulversprühanordnungen (5);
**dadurch gekennzeichnet, dass**
diese ferner einen Flachkabelstecker (2), eine Pulverspeicherbasis (3) und eine Düsenbasisplatte (4) umfasst;
der Boden der Pulverspeicherbasis (3) auf der Düsenbasisplatte (4) installiert ist, das Innere der Pulverspeicherbasis (3) mit einem Pulverspeicherhohlraum (31) vorgesehen ist und die Oberseite des Pulverspeicherbasis (3) mit einem ersten Zuführanschluss (32) vorgesehen ist; die Oberseite des Pulverspeicherbehälters (1) mit einem zweiten Zuführanschluss (11) vorgesehen ist, der Boden des Pulverspeicherbehälters (1) mit einem Ausstoßanschluss (12) vorgesehen ist, der Boden des Pulvervorratsbehälters (1) nach Passieren des ersten Zuführanschlusses (32) in den Pulverspeicherhohlraum (31) eingeführt ist, und sich der Pulverspeicherbehälter (1) relativ zum Pulvervorratsbehälter (3) auf und ab bewegen kann; zwei Seiten der Pulverspeicherbasis (3) in der Breitenrichtung jeweils mit einer Reihe von vibrierenden Pulversprühanordnung (5) vorgesehen sind, und die zwei Seiten der Pulverspeicherbasis (3) in der Breitenrichtung jeweils mit einer Reihe von Hebern (33), die mit dem Pulverspeicherhohlraum (31) kommunizieren, vorgesehen sind, und das Pulvereinlassende der vibrierenden Pulversprühanordnung (5) und der Heber (33) in einer eins-zu-eins-entsprechungsweise angeordnet sind;
die Düsenbasisplatte (4) mit zwei Reihen von Sprühöffnungen (41) vorgesehen ist, die Sprühöffnungen (41) ausgebildet sind, um Pulver auszustoßen, ein Pulverauslassende der vibrierenden Pulversprühanordnung (5) sich auf einer Seite der Sprühöffnungen (41) in einer eins-zu-eins-entsprechungsweise befindet, und der Pulverausstoßbereich des Pulverauslassendes der vibrierenden Pulversprühanordnung (5) innerhalb des Zuführbereichs der entsprechenden Sprühöffnungen (41) ist, das Pulvereinlassende der vibrierenden Pulversprühanordnung (5) und das Pulverauslassende der vibrierenden Pulversprühanordnung horizontal angeordnet sind, oder das Pulvereinlassende der vibrierenden Pulversprühanordnung (5) und das Pulverauslassende der vibrierenden Pulversprühanordnung (5) relativ zur horizontalen Ebene schräg angeordnet sind;
die vibrierende Pulversprühanordnung (5) elektrisch mit dem Flachkabelstecker (2) verbunden ist, und der Flachkabelstecker (2) elektrisch mit dem Steuersystem verbunden ist, und das Steuersystem die Vibration der vibrierenden Pulversprühanordnung (5) über den Flachkabelstecker (2) steuert.

2. Digitale Pulververteilungsdüse für große Pulvermengen und eine breitere Anpassungsfähigkeit nach Anspruch 1, wobei die vibrierende Pulversprühanordnung (5) eine Klammer (51), ein vibrierendes Element (52) und eine Pulversprühbox (53) umfasst, wobei die Klammer (51) fest an der Pulverspeicherbasis (3) installiert ist, die Oberseite des vibrierenden Elements (52) abnehmbar an der Klammer (51) installiert ist, die Unterseite des vibrierenden Elements (52) fest mit der Pulversprühbox (53) verbunden ist, und der Heber (33) und die Pulversprühbox (53) in einer eins-zu-eins-entsprechungsweise angeordnet sind;
die Pulversprühbox (53) eine hohle Struktur mit Öffnungen an beiden Enden aufweist, die Öffnung an einem Ende der Pulversprühbox (53) nach Passieren des entsprechenden Hebers (33) in den Pulverspeicherhohlraum (31) eingeführt ist und die Öffnung am anderen Ende der Pulversprühbox (53) zu einer Seite der entsprechenden Sprühöffnung (41) hin angeordnet ist.

3. Digitale Pulververteilungsdüse für große Pulvermengen und eine breitere Anpassungsfähigkeit nach Anspruch 2, wobei die Klammer (51) einen vertikalen Teil (511) und einen Klemmteil (512) umfasst, der vertikale Teil (511) vertikal mit dem Klemmteil (512) verbunden ist, der vertikale Teil (511) fest an der Pulverspeicherbasis (3) installiert ist, und das vibrierende Element (52) abnehmbar an dem Klemmteil (512) installiert ist.

4. Digitale Pulververteilungsdüse für große Pulvermengen und eine breitere Anpassungsfähigkeit nach Anspruch 3, wobei der Klemmteil (512) einen ersten Klemmblock (5121) und einen zweiten Klemmblock (5122) umfasst, die parallel zueinander angeordnet sind, ein Klemmspalt zwischen dem ersten Klemmblock (5121) und dem zweiten Klemmblock (5122) vorgesehen ist, und das vibrierende Element (52) in dem Klemmspalt zwischen dem ersten Klemmblock (5121) und dem zweiten Klemmblock (5122) lösbar eingeklemmt ist.

5. Digitale Pulververteilungsdüse für große Pulvermengen und eine breitere Anpassungsfähigkeit nach Anspruch 2, wobei der Heber (33) zwischen der Klammer (51) und der Düsenbasisplatte (4) angeordnet ist, die Pulversprühbox (53) oberhalb der Düsenbasisplatte (4) angeordnet ist, die Öffnung an einem Ende der Pulversprühbox (53) nach Passieren des entsprechenden Hebers (33) in den Pulverspeicherhohlraum (31) eingeführt ist, und die Öffnung am anderen Ende der Pulversprühbox (53) oberhalb der Seite der Sprühöffnung (41) angeordnet ist.

6. Digitale Pulververteilungsdüse für große Pulvermengen und eine breitere Anpassungsfähigkeit nach Anspruch 2, wobei der Längsschnitt der Pulversprühbox (53) rechteckig ist und der Winkel zwischen der Diagonalen im Längsschnitt der Pulversprühbox (53) und der Horizontalebene größer als 48° ist.

7. Digitale Pulververteilungsdüse für große Pulvermengen und eine breitere Anpassungsfähigkeit nach Anspruch 2, wobei in derselben Reihe der vibrierenden Pulversprühanordnungen (5), der Abstand zwischen zwei benachbarten Pulversprühboxen (53) gleich ist.

8. Digitale Pulververteilungsdüse für große Pulvermengen und eine breitere Anpassungsfähigkeit gemäß Anspruch 2, wobei der Flachkabelstecker (2) fest an dem Pulverspeicherbehälter (1) installiert ist und der Flachkabelstecker (2) in der Breitenrichtung an beiden Seiten des Pulverspeicherbehälters (1) angeordnet ist, und die vibrierenden Elemente (52) jeder Reihe der vibrierenden Pulversprühanordnungen (5) elektrisch mit den Verbindungsdrähten des entsprechenden Flachkabelsteckers (2) verbunden sind.

9. Digitale Pulververteilungsdüse für große Pulvermengen und eine breitere Anpassungsfähigkeit nach Anspruch 1, wobei die Sprühöffnung (41) einen Zuführteil (411) und einen Verteilungsteil (412) umfasst, die miteinander kommunizieren, und der Verteilungsteil (412) mit einem unteren Ende des Zuführteils (411) verbunden ist ;
der Zuführteil (411) eine sich verjüngende Öffnung mit einer großen Querschnittsfläche im oberen Abschnitt und einer kleinen Querschnittsfläche im unteren Abschnitt ist, und ein Verjüngungswinkel λ des Zuführteils (411) in einem Bereich von 10° bis 90° liegt, und der Verteilungsteil (412) ein kreisförmiges Loch, ein quadratisches Loch oder ein elliptisches Loch ist.

10. Digitale Pulververteilungsdüse für große Pulvermengen und eine breitere Anpassungsfähigkeit nach Anspruch 9, wobei der Verteilungsteil (412) ein kreisförmiges Loch ist.

11. Digitale Pulververteilungsdüse für große Pulvermengen und breitere Anpassungsfähigkeit nach Anspruch 1, wobei die Pulverspeicherbasis (3) eine Pulverspeicherbox und eine Dichtungsplatte umfasst, der Innenhohlraum der Pulverspeicherbox der Pulverspeicherhohlraum (31) ist, und die Dichtungsplatte jeweils auf beiden Seiten der Pulverspeicherbox in der Breitenrichtung angeordnet ist;
die Pulverspeicherbox mit einer Öffnung für den Pulverspeicherbox vorgesehen ist und die Dichtungsplatte mit einer Öffnung für die Dichtungsplatte vorgesehen ist;
optional ist die Dichtungsplatte aus einem weichen Material hergestellt.

12. Digitale Pulververteilungsdüse für große Pulvermengen und eine breitere Anpassungsfähigkeit nach Anspruch 2, wobei die vibrierende Pulversprühanordnung (5) ferner einen Einstellblock (54), ein Verbindungsstück (55) und eine abgedichtete Kammer (56) umfasst;
das Verbindungsstück (55) fest mit dem vibrierenden Element (52) verbunden ist und das Verbindungsstück (55) abnehmbar an der Klammer (51) installiert ist;
die abgedichtete Kammer (56) und der Heber (33) in einer eins-zu-eins-entsprechungsweise angeordnet sind, ein Ende der abgedichteten Kammer (56) auf einer Seite der Pulversprühbox (53) aufgesteckt ist, und das andere Ende der abgedichteten Kammer (56) nach Passieren des Hebers (33) in den Pulverspeicherhohlraum (31) eingeführt ist;
der Einstellblock (54) an der Unterseite des vibrierenden Elements (52) installiert ist.

13. Digitale Pulververteilungsdüse für große Pulvermengen und eine breitere Anpassungsfähigkeit nach Anspruch 12, wobei der Einstellblock (54) fest mit dem vibrierenden Element (52) verbunden ist und die Position des Einstellblocks (54) verschoben werden kann und der Winkel des Einstellblocks (54) eingestellt werden kann.

## Revendications

1. Buse de distribution de poudre numérique pour une grande quantité de poudre et une adaptabilité supérieure, comprenant un système de commande, une trémie de stockage de poudre (1) et une pluralité d'ensembles de pulvérisation de poudre vibrants (5) ;
**caractérisée en ce qu'**elle comprend en outre un connecteur de câble plat (2), une base de stockage de poudre (3) et une plaque d'embase de buse (4) ;
la partie inférieure de ladite base de stockage de poudre (3) étant installé sur la plaque d'embase de buse (4), l'intérieur de la base de stockage de poudre (3) étant doté d'une cavité de stockage de poudre (31), et la partie supérieure de la base de stockage de poudre (3) étant doté d'un premier orifice d'alimentation (32) ; la partie supérieure de ladite trémie de stockage de poudre (1) étant doté d'un deuxième orifice d'alimentation (11), la partie inférieure de ladite trémie de stockage de poudre (1) étant doté d'un orifice de déchargement (12), la partie inférieure de ladite trémie de stockage de poudre (1) étant insérée dans la cavité de stockage de poudre (31) après avoir traversé le premier orifice d'alimentation (32), et la trémie de stockage de poudre (1) peut se déplacer vers le haut et vers le bas par rapport à la base de stockage de poudre (3) ;
les deux côtés de la base de stockage de poudre (3) en direction de largeur étant respectivement dotés d'une rangée d'ensembles de pulvérisation de poudre vibrants (5), et les deux côtés de la base de stockage de poudre (3) en direction de largeur étant respectivement dotés d'une rangée de connecteurs (33) en communication avec la cavité de stockage de poudre (31) et l'extrémité d'entrée de poudre de l'ensemble de pulvérisation de poudre vibrant (5) et les connecteurs (33) étant disposés selon une correspondance biunivoque ;
ladite plaque d'embase de buse (4) étant dotée de deux rangées de trous de pulvérisation (41), les trous de pulvérisation (41) étant configurés pour décharger de la poudre, une extrémité de sortie de poudre de l'ensemble de pulvérisation de poudre vibrant (5) étant située sur un des côtés des trous de pulvérisation (41) selon une correspondance biunivoque, et la zone de déchargement de poudre de l'extrémité de sortie de poudre de l'ensemble de pulvérisation de poudre vibrant (5) est dans le limite de la zone d'alimentation des trous de pulvérisation correspondants (41), l'extrémité d'entrée de poudre de l'ensemble de pulvérisation de poudre vibrant (5) et l'extrémité de sortie de poudre de l'ensemble de pulvérisation de poudre vibrant étant tous les deux disposés en direction horizontale, ou l'extrémité d'entrée de poudre de l'ensemble de pulvérisation de poudre vibrant (5) et l'extrémité de sortie de poudre de l'ensemble de pulvérisation de poudre vibrant (5) étant disposés de façon oblique par rapport au plan horizontal ;
l'ensemble de pulvérisation de poudre vibrant (5) étant connecté électriquement à un connecteur de câble plat (2), et le connecteur de câble plat (2) étant connecté électriquement au système de commande, et ledit système de commande étant destiné à commander la vibration de l'ensemble de pulvérisation de poudre vibrant (5) à travers le connecteur de câble plat (2).

2. Buse de distribution de poudre numérique pour une grande quantité de poudre et une adaptabilité supérieure selon la revendication 1, dans laquelle l'ensemble de pulvérisation de poudre vibrant (5) comprend un étrier (51), un élément de vibration (52) et une boîte de pulvérisation de poudre (53), ledit étrier (51) étant installé de façon fixe sur la base de stockage de poudre (3), la partie supérieure dudit élément de vibration (52) étant installée de façon amovible sur ledit étrier (51), la partie inférieure dudit élément de vibration (52) étant connectée de façon fixe sur ladite boîte de pulvérisation de poudre (53), et le connecteur (33) et la boîte de pulvérisation de poudre (53) étant disposé selon une correspondance biunivoque ;
ladite boîte de pulvérisation de poudre (53) étant une structure creuse ayant des ouvertures aux deux extrémités, l'ouverture à une des extrémités de la boîte de pulvérisation de poudre (53) étant insérée dans la cavité de stockage de poudre (31) après avoir traversé le connecteur correspondant (33), et l'ouverture à l'autre des extrémités de la boîte de pulvérisation de poudre (53) étant disposée vers un des côtés du trou de pulvérisation correspondant (41).

3. Buse de distribution de poudre numérique pour une grande quantité de poudre et une adaptabilité supérieure selon la revendication 2, dans laquelle ledit étrier (51) comprend une partie verticale (511) et une partie de serrage (512), la partie verticale (511) étant connectée en direction verticale à la partie de serrage (512), la partie verticale (511) étant installé de façon fixe sur la base de stockage de poudre (3), et ledit élément de vibration (52) étant installé de façon amovible sur la partie de serrage (512).

4. Buse de distribution de poudre numérique pour une grande quantité de poudre et une adaptabilité supérieure selon la revendication 3, dans laquelle la partie de serrage (512) comprend un premier bloc de serrage (5121) et un deuxième bloc de serrage (5122) disposés parallèlement l'un à l'autre, une fente de serrage étant réservée entre le premier bloc de serrage (5121) et le deuxième bloc de serrage (5122), et ledit élément de vibration (52) étant serrée de façon amovible dans la fente de serrage entre le premier bloc de serrage (5121) et le deuxième bloc de serrage (5122).

5. Buse de distribution de poudre numérique pour une grande quantité de poudre et une adaptabilité supérieure selon la revendication 2, dans laquelle le connecteur (33) est disposé entre ledit étrier (51) et la plaque d'embase de buse (4), la boîte de pulvérisation de poudre (53) étant disposée au-dessus la plaque d'embase de buse (4), l'ouverture à une des extrémités de la boîte de pulvérisation de poudre (53) étant insérée dans la cavité de stockage de poudre (31) après avoir traversé le connecteur correspondant (33), et l'ouverture à l'autre des extrémités de la boîte de pulvérisation de poudre (53) étant située au-dessus dudit côté du trou de pulvérisation (41).

6. Buse de distribution de poudre numérique pour une grande quantité de poudre et une adaptabilité supérieure selon la revendication 2, dans laquelle la section longitudinale de la boîte de pulvérisation de poudre (53) est rectangulaire, et l'angle entre la ligne diagonale dans la section longitudinale de la boîte de pulvérisation de poudre (53) et le plan horizontal est supérieur à 48°.

7. Buse de distribution de poudre numérique pour une grande quantité de poudre et une adaptabilité supérieure selon la revendication 2, dans laquelle dans la même rangée d'ensembles de pulvérisation de poudre vibrants (5), l'espacement entre deux boîtes de pulvérisation de poudre (53) est égal.

8. Buse de distribution de poudre numérique pour une grande quantité de poudre et une adaptabilité supérieure selon la revendication 2, dans laquelle le connecteur de câble plat (2) est installé de façon fixe sur la trémie de stockage de poudre (1), et le connecteur de câble plat (2) est disposé sur les deux côtés de la trémie de stockage de poudre (1) en direction de largeur, les éléments de vibration (52) de chaque rangée des ensembles de pulvérisation de poudre vibrants (5) étant connectés électriquement aux fils de connexion du connecteur de câble plat correspondant (2).

9. Buse de distribution de poudre numérique pour une grande quantité de poudre et une adaptabilité supérieure selon la revendication 1, dans laquelle le trou de pulvérisation (41) comprend une partie d'alimentation (411) et une partie de distribution (412) qui sont en communication l'une avec l'autre, et la partie de distribution (412) est connectée à une extrémité inférieure de la partie d'alimentation (411) ;
la partie d'alimentation (411) étant un trou effilé ayant une grande aire de section transversale auprès d'une partie supérieure et une faible aire de section transversale auprès d'une partie inférieure, et un angle d'effilement λ de la partie d'alimentation (411) étant dans une plage de 10° à 90°, et la partie de distribution (412) étant un trou circulaire, un trou carré ou un trou elliptique.

10. Buse de distribution de poudre numérique pour une grande quantité de poudre et une adaptabilité supérieure selon la revendication 9, dans laquelle la partie de distribution (412) est un trou circulaire.

11. Buse de distribution de poudre numérique pour une grande quantité de poudre et une adaptabilité supérieure selon la revendication 1, dans laquelle la base de stockage de poudre (3) comprend une boîte de stockage de poudre et une plaque d'étanchéité, la cavité intérieure de ladite boîte de stockage de poudre étant la cavité de stockage de poudre (31), et la plaque d'étanchéité étant disposée respectivement sur les deux côtés de la boîte de stockage de poudre en direction de largeur ;
la boîte de stockage de poudre étant dotée d'une ouverture de boîte de stockage de poudre, et la plaque d'étanchéité étant dotée d'une ouverture de plaque d'étanchéité ;
optionnellement, la plaque d'étanchéité étant faite d'un matériau souple.

12. Buse de distribution de poudre numérique pour une grande quantité de poudre et une adaptabilité supérieure selon la revendication 2, dans laquelle l'ensemble de pulvérisation de poudre vibrant (5) comprend en outre un bloc de réglage (54), une pièce de connexion (55) et une chambre étanche (56) ;
la pièce de connexion (55) étant connecté de façon fixe audit élément de vibration (52), et la pièce de connexion (55) étant installée de façon amovible sur ledit étrier (51) ;
la chambre étanche (56) et le connecteur (33) étant disposé selon une correspondance biunivoque, une des extrémités de la chambre étanche (56) étant emmanchée sur un des côtés de la boîte de pulvérisation de poudre (53), et l'autre des extrémités de la chambre étanche (56) étant insérée dans la cavité de stockage de poudre (31) après avoir traversé le connecteur (33) ;
le bloc de réglage (54) étant installé sur le côté inférieur dudit élément de vibration (52).

13. Buse de distribution de poudre numérique pour une grande quantité de poudre et une adaptabilité supérieure selon la revendication 12, dans laquelle le bloc de réglage (54) est connecté de façon fixe audit élément de vibration (52), et la position du bloc de réglage (54) peut être déplacée et l'angle du bloc de réglage (54) peut être réglé.
